# EUROPEAN PATENT APPLICATION

(11) **EP 4 775 460 A1**
(43) Date of publication of application: **15.07.2026**
(21) Application number: 25150965.9
(22) Date of filing: 09.01.2025
(51) Int. Cl.: B60S 1/38

(54) **ASSEMBLY STRUCTURE OF WIPER ADAPTER**

(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(57) **Abstract**

An assembly structure of a wiper adapter includes a fixing base (10, 10a) and an adapter (20, 20a). The fixing base (10, 10a) includes a seat with a receiving space (110), a front slot (12, 12a), and a rear slot (13, 13a). The front and rear slots (11, 12) communicate with the receiving space (110) and are located on two sides of the receiving space (110). The seat includes a positioning part (14, 14a) located on one side of the front slot, and a first rear wall (15, 15a) and a second rear wall (16, 16a) located on both sides of the rear slot (13, 13a). The wiper adapter (20, 20a) includes a main body (21, 21a), a front plate (22, 22a) and a rear plate (23, 23a) located on two sides of the main body (21, 21a), a latch part (24, 24a) disposed on the front plate (22, 22a), and a first rear guiding groove (25, 25a) and a first rear guiding groove (26, 26a) disposed on both sides of the rear plate (23, 23a). The wiper adapter (20, 20a) is assembled to the fixing base (10, 10a) by inserting the front plate (22, 22a) into the front slot and the rear plate (23, 23a) into the rear slot (13, 13a). Thus, the latch part (24, 24a) engages with the positioning part (14, 14a), the first rear guiding groove (25, 25a) accommodates the first rear wall (15, 15a), and the first rear guiding groove (26, 26a) accommodates the second rear wall (16, 16a).

## Description

### BACKGROUND OF THE DISCLOSURE

### Technical Field

The present disclosure relates to a wiper, particularly relates to an assembly structure of a wiper adapter.

### Description of Related Art

Car wipers are installed on the outer side of the glass of a car and connected to a driving arm of the car, and the wipers are driven by the driving arm to swing back and forth on the glass in order to scrape away rainwater, dirt and other foreign substances.

Furthermore, car wipers mainly combine the driving arm with an adapter and a wiper blade with the bottom side of the adapter. Accordingly, the driving arm moves the adapter and presses the wiper blade down to clean the glass of the car. In addition, a fixing base is provided between the adapter and wiper blade, and the wiper blade is assembled to the fixing base to complete the wiper assembly. Most of the related-art adapters and fixed bases utilize elastic keys for snap-fit connection. However, the adapters are usually made of plastic parts, the elastic keys are prone to deterioration or lack of resilience after a certain time of use, causing the adapters to be prone to shaking and resulting in unstable application of force by the driving arm. Obviously, the related-art wipers need to be improved.

In view of the deficiencies of the related art, the present discloser conducted researches based on the existing technologies and the application of theories, and finally developed an assembly structure of a wiper adapter in accordance with the present disclosure to overcome the deficiencies of the related art.

### SUMMARY OF THE DISCLOSURE

In some embodiments of the present disclosure, the present disclosure provides an assembly structure of a wiper adapter, which combines the adapter to the fixing base and provides a secured combination method.

To achieve the aforementioned objectively, the present disclosure discloses an assembly structure of a wiper adapter, which includes a fixing base and an adapter. The fixing base includes a seat with a receiving space, a front slot and a rear slot, the front slot and rear slot communicating with the receiving space and located on two sides of the receiving space, the seat comprising a positioning part located on a side of the front slot and a first rear wall and a second rear wall located on two sides of the rear slot respectively. The adapter includes a main body, a front plate and a rear plate located on two sides of the main body respectively, a latch part arranged at the front plate, and a first rear guiding groove and a second rear guiding groove arranged on two sides of the rear plate respectively. The adapter is assembled to the fixing base by inserting the front plate into the front slot and the rear plate into the rear slot, the latch part engages with the positioning part, the first rear guiding groove accommodates the first rear wall, and the second rear guiding groove accommodates the second rear wall.

In some embodiments of the present disclosure, the adapter includes a pivot part for combining a driving arm, and the pivot part is located on the main body.

In some embodiments of the present disclosure, the seat includes a first front wall and a second front wall located on two sides of the front slot respectively, the main body includes a first front guiding groove and a second front guiding groove located on two sides of the front plate respectively, the first front wall is slidable relative to the first front guiding groove, and the second front wall is slidable relative to the second front guiding groove.

In some embodiments of the present disclosure, the support rib extends in the direction parallel to the elastic arm to form and is an L-shape.

In some embodiments of the present disclosure, the seat of the fixing base comprises a plurality of slide slots formed around the periphery of the receiving space, the adapter comprises a plurality of slide blocks located on a side of the main body facing the fixing base, and the slide blocks are positioned in the slide slots respectively.

In some embodiments of the present disclosure, each slide slot is an L-shaped slot, and each slide block is moved and positioned in the corresponding slide slot.

In some embodiments of the present disclosure, the slide slots are spaced from each other and located on two sides of the receiving space respectively, and the slide blocks are spaced from each other and disposed at the bottom of the main body.

In some embodiments of the present disclosure, the main body includes a latching rib located on an inner wall of the rear slot, and the latching rib latches with the rear plate.

In some embodiments of the present disclosure, the latch part is located at an outer end of the front plate away from the rear plate.

In some embodiments of the present disclosure, the latch part is a hook, the positioning part is a serrated rib with a two-stage positioning point, the latch part under the effect of an external force is moved from a side of the positioning part to another side of the position part and positioned.

In some embodiments of the present disclosure, the adapter further includes a pairs of wing plates located on two sides of the main body respectively, and the first rear guiding groove and the second rear guiding groove are located between the pair of wing plates and the rear plate.

Compared with the related art, when the adapter of the assembly structure of a wiper adapter of the present disclosure is assembled to the fixing base 10, it is necessary to insert the front plate diagonally into the front slot at an approximate angle first, and then screw the adapter into the fixing base, and after that, move the adapter towards the rear slot, so as to move the rear plate into the rear slot. In this way, the latch part on the front plate will latch with the positioning part, and the latching rib of the adapter will latch with the rear plate. In addition, the slide block of the adapter will be latched in the slide slot of the fixing base. Accordingly, the front plate passes through the front slot and the rear plate passes through the rear slot and they are assembled into the fixing base. Further, the first rear guiding groove of the adapter passes through the first rear wall, and the second rear guiding groove of the adapter passes through the second rear wall. Accordingly, the adapter is firmly combined with the fixing base, thereby achieving the effects of simplifying the assembly structure of a wiper adapter, and firmly combining the adapter to the fixing base without the risk of being loosened.

### BRIEF DESCRIPTION OF THE DRAWINGS

FIG. 1 is a perspective view of a wiper structure of the present disclosure.
FIG. 2 is a schematic view of the assembly of a wiper adapter of the present disclosure.
FIG. 3 is a disassembled view of the assembly structure of the wiper adapter of the present disclosure.
FIG. 4 is a three-dimensional partial blow-up view of a fixing base of the present disclosure.
FIGS. 5 and 6 are schematic views of an adapter inserted obliquely into the fixing base of the present disclosure.
FIG. 7 is a schematic view of the adapter placed flatly on the fixing base of the present disclosure.
FIG. 8 is a schematic view of the adapter moving relative to the fixing base of the present disclosure.
FIGS. 9 and 10 are cross-sectional views of the adapter positioned at the fixing base of the present disclosure.
FIG. 11 is a perspective view of the adapter positioned at the fixing base of the present disclosure.
FIG. 12 is a perspective view of the assembly structure of a wiper adapter in accordance with another embodiment of the present disclosure.
FIG. 13 is a disassembled view of the assembly structure of a wiper adapter in accordance with another embodiment of the present disclosure.

### DETAILED DESCRIPTION

The detailed description and technical contents of the present disclosure are illustrated with reference to the accompanying drawings, which are intended for the illustrative purposes only, but not intended for limiting the disclosure.

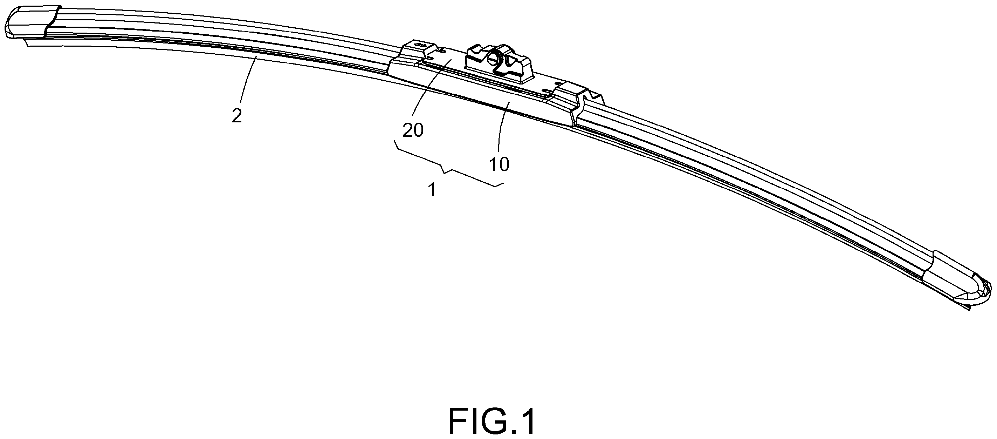

With reference to FIG. 1 for the perspective of view of a wiper structure of the present disclosure, the assembly structure of a wiper adapter 1 includes a fixing base 10 and an adapter 20. The adapter 20 is combined with the fixing base 10. The adapter 20 is provided to combined with a driving arm (not shown in the figure). The fixing base 10 is combined with the wiper components such as a wiper blade 2. A more detailed description of the assembly structure of a wiper adapter 1 is given below.

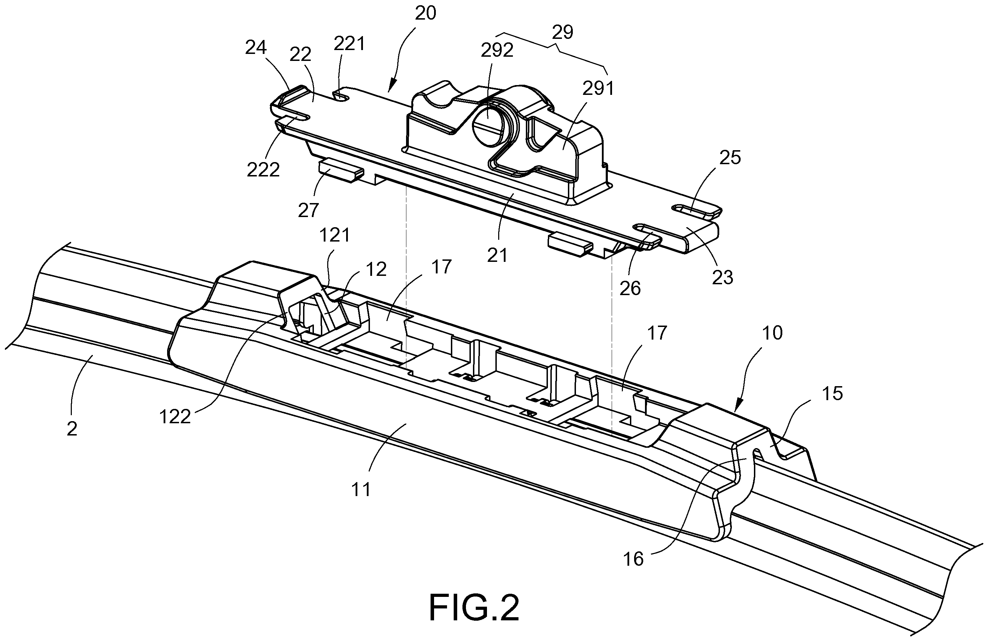

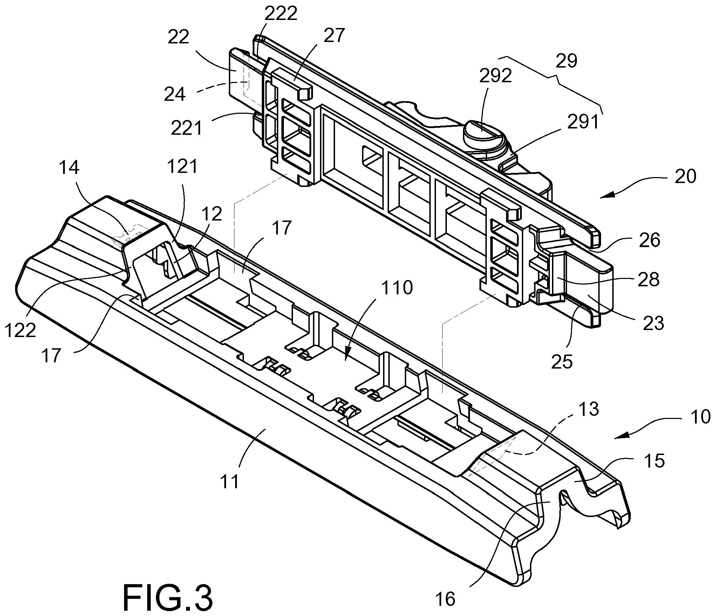

With reference to FIGS. 2 and 3 for the schematic view of assembling a wiper adapter of the present disclosure, and the dissembled view of an assembly structure of a wiper adapter of the present disclosure respectively, the fixing base 10 of the present disclosure includes a seat 11. The seat 11 has a receiving space 110, a front slot 12 and a rear slot 13. The front slot 12 and the rear slot 13 communicate with the receiving space 110 and is located on two sides of the receiving space 110 respectively. The seat 11 further includes a positioning part 14 located on a side of the front slot and a first rear wall 15 and a second rear wall 16 located on two sides of the rear slot 13 respectively.

In addition, the adapter 20 includes a main body 21, a front plate 22 and a rear plate 23 located on two sides of the main body 21 respectively, a latch part 24 arranged at the front plate 22, and a first rear guiding groove 25 and a second rear guiding groove 26 arranged on two sides of the rear plate 23 respectively. In this embodiment, the latch part 24 is a hook. The latch part 24 is located at an outer end of the front plate 22 away from the rear plate 23.

In more detail, the seat 11 includes a first front wall 121 and a second front wall 122 located on two sides of the front slot 12 respectively. The main body 21 includes a first front guiding groove 221 and a second front guiding groove 222 arranged on two sides of the front plate 22 respectively. In addition, the first front wall 121 is slidable relative to the first front guiding groove 221, and the second front wall 122 is slidable relative to the second front guiding groove 222.

In this embodiment, the seat 11 of the fixing base 10 includes a plurality of slide slots 17 arranged around the periphery of the receiving space 110. The adapter 20 has a plurality of slide blocks 27 on a side of the main body 21 facing the fixing base 10, and the slide slots 17 are spaced from each other and arranged on opposite sides of the receiving space 110 respectively. In addition, the slide blocks 27 are spaced from each other and arranged at the bottom of the main body 21 and positioned in the slide slots 17. Further, each slide slot 17 is an L-shaped slot. Each slide block 27 is moved and positioned in the corresponding slide slot 17.

It is noteworthy that the main body 21 has a latching rib 28 installed to an inner wall of the rear slot 13. In this way, after the adapter 20 passes into the front slot 12 through the front plate 22 and the rear plate 23 passes into the rear slot 13, and they are assembled with the fixing base 10, the latching rib 28 presses against and latches with the rear plate 23, and the latch part 24 latches with the positioning part 14.

It is noteworthy that the adapter 20 of the present disclosure further includes a pivot part 29 arranged on the main body 21, and the pivot part 29 includes a pivot seat 291 and a pivot 292 arranged on the pivot seat 291. The pivot 292 is provided for combining a driving arm. In this way, the driving arm is combined with the fixing base 10 through the adapter 20, and provided for driving the wiper blade combined with the bottom side of the fixing base 10 to swing.

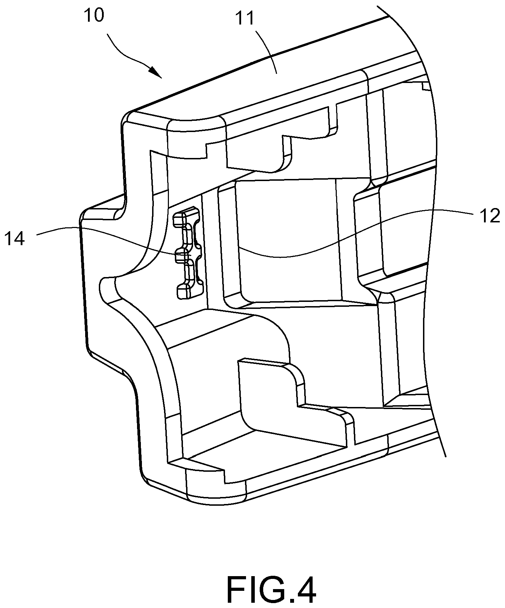

With reference to FIG. 4 for a partial blow-up view of a fixing base of the present disclosure, the seat 11 of the fixing base 10 includes a positioning part 14 located on a side of the front slot 12. In this embodiment, the positioning part 14 is a serrated rib with a two-stage positioning point. The latch part 24 under the effect of an external force is moved from a side to another side of the positioning part 14 and positioned.

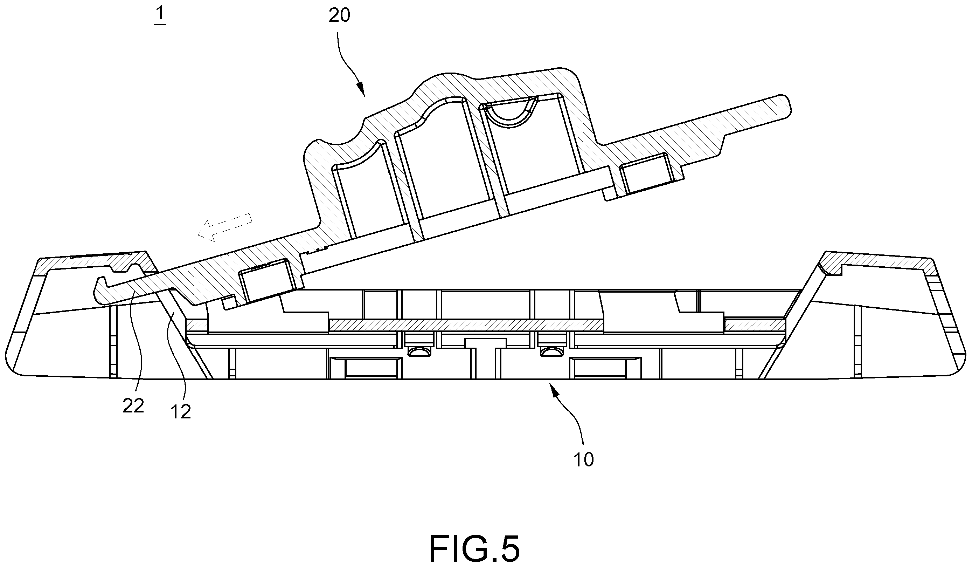

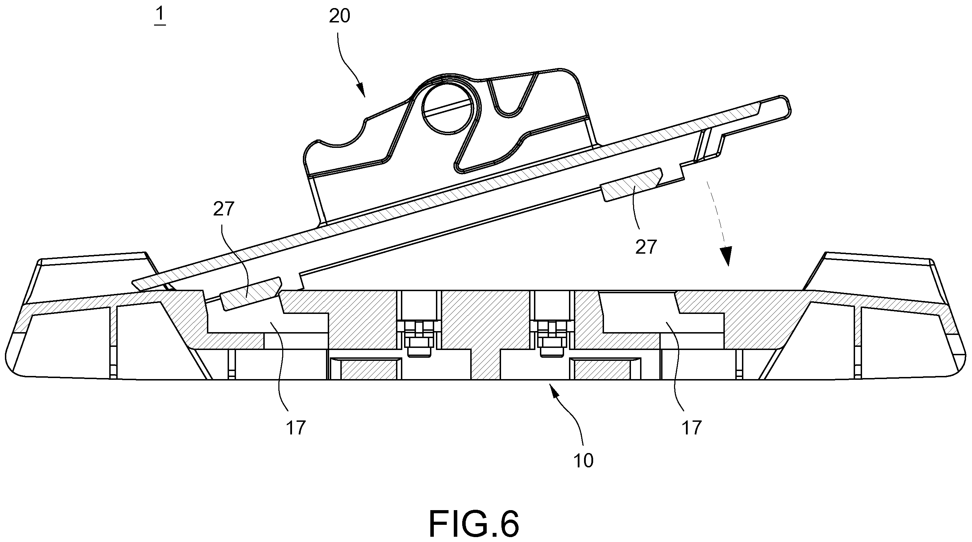

With reference to FIGS. 5 and 6 for the schematic views of the adapter obliquely inserted into the fixing base of the present disclosure, the adapter 2 is combined with the fixing base 10 in the assembly structure of a wiper adapter 1 of the present disclosure. As shown in FIG. 5, when the adapter 20 is assembled to the fixing base 10, the front plate 22 is inserted diagonally into the front slot 12 at an angle of approximately 45 degrees. As shown in FIG. 6, the adapter 20 is screwed into the fixing base 10. It is noteworthy that the slide block 27 of the adapter 20 will align with the slide slot 17 of the fixing base 10.

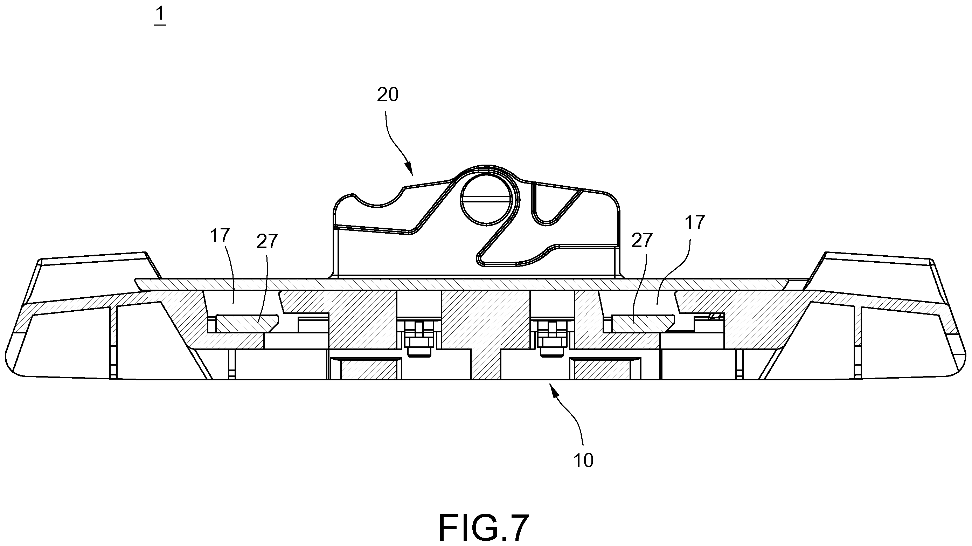

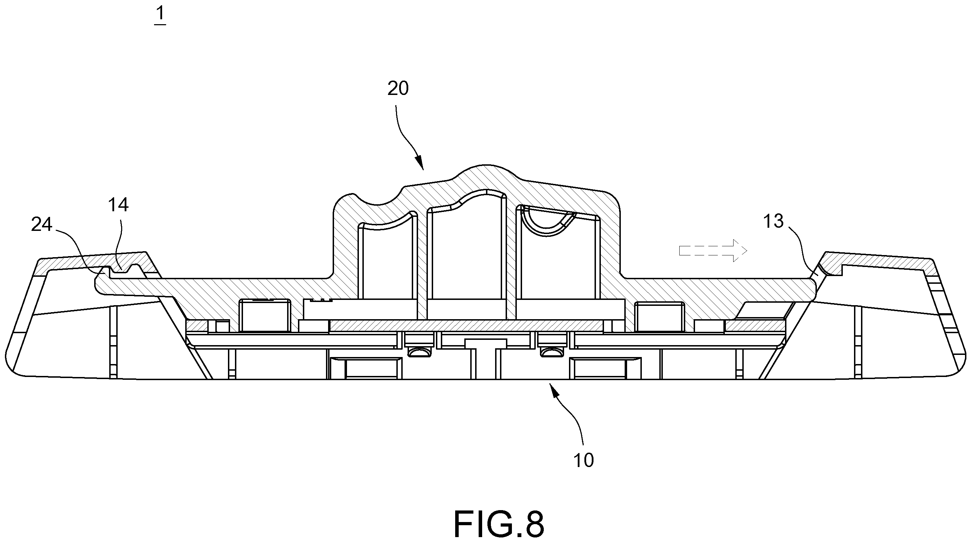

With reference to FIGS. 7 and 8 for the schematic view of an adapter placed flatly on the fixing base of the present disclosure and the schematic view of the adapter moving relative to the fixing base of the present disclosure respectively, when the adapter 20 is placed into the fixing base 10, the slide block 27 of the adapter 20 will fall into the slide slot 17 of the fixing base 10. As shown in FIG. 8, when a force is applied to the adapter 20, the adapter 20 will move towards the rear slot 13. It is noteworthy that the latch part 24 of the adapter 20 will latch with a side (the outer side) of the positioning part 14.

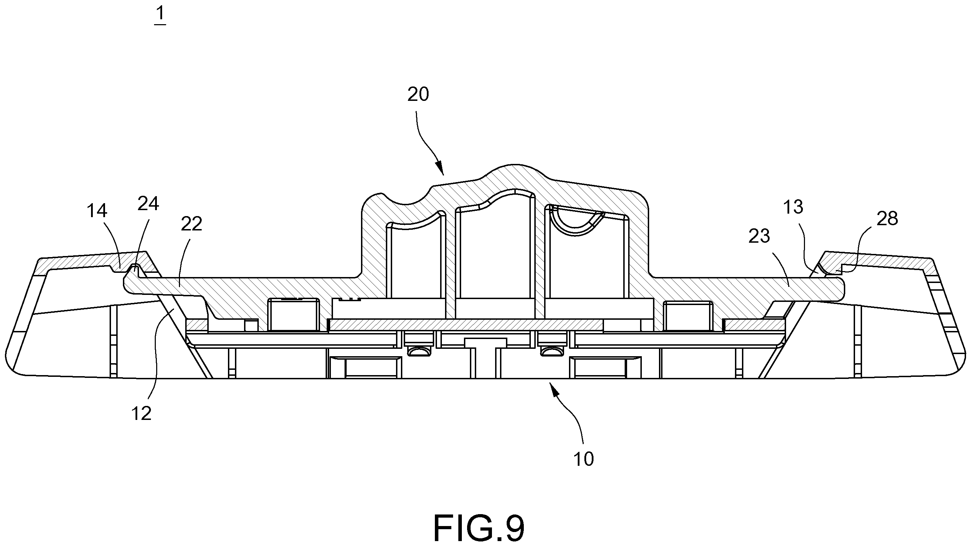

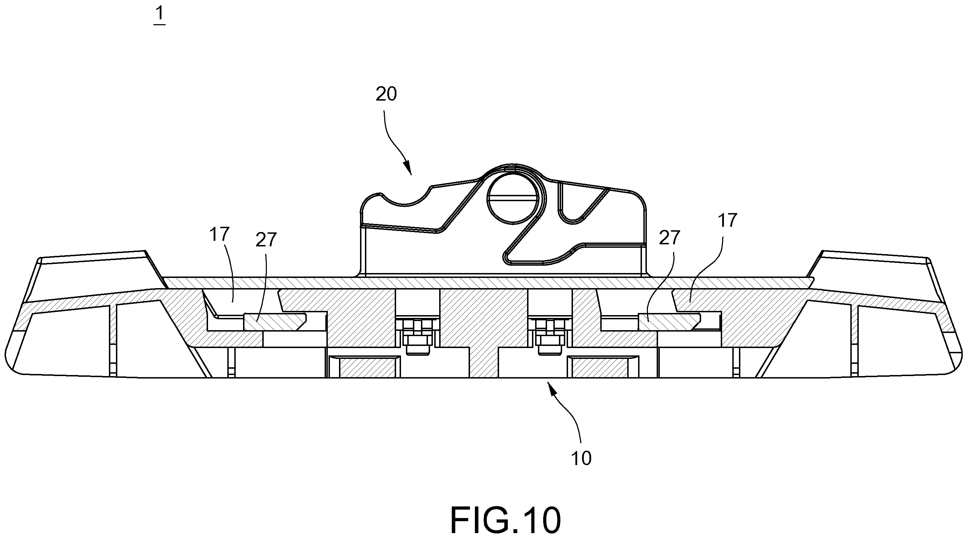

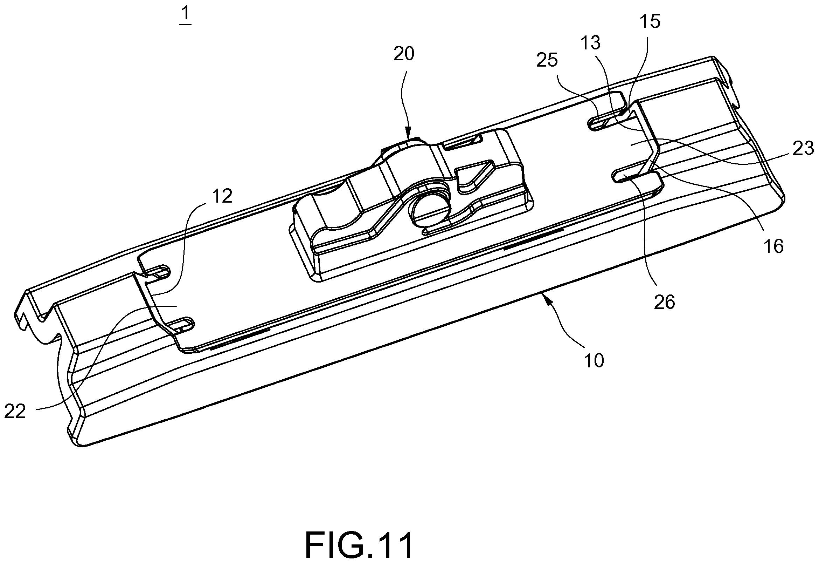

With reference to FIGS. 9 to 11 for the two cross-sectional views of the adapter positioned at the fixing base of the present disclosure and the perspective view of the adapter positioned at the fixing base of the present disclosure respectively, the adapter 20 of the present disclosure moves towards the rear slot 13 to move the rear plate 23 into the rear slot 13. At this time, the latch part 24 of the front plate 22 will latch with another side (the inner side) of the positioning part 14 and be positioned. In addition, the rear plate 23 will be pressed and held by the latching rib 28. As shown in FIG. 10, after the adapter 20 of the present disclosure moves towards the rear slot 13, the slide block 27 of the adapter 20 will snap into the slide slot 17 of the fixing base 10. As shown in FIG. 11, the front plate 22 is inserted into the front slot 12 and the rear plate 23 is inserted into the rear slot 13 according to the aforementioned method to form the fixing base 10 in the adapter 20 of the present disclosure. In addition, the first rear guiding groove 25 is inserted with the first rear wall 15, and the second rear guiding groove 26 is inserted with the second rear wall 16. In this way, the adapter 20 is securely combined with the fixing base 10.

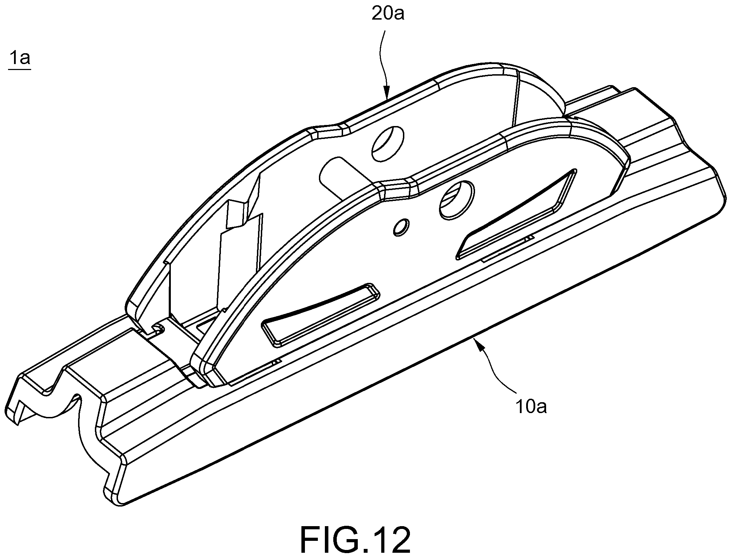

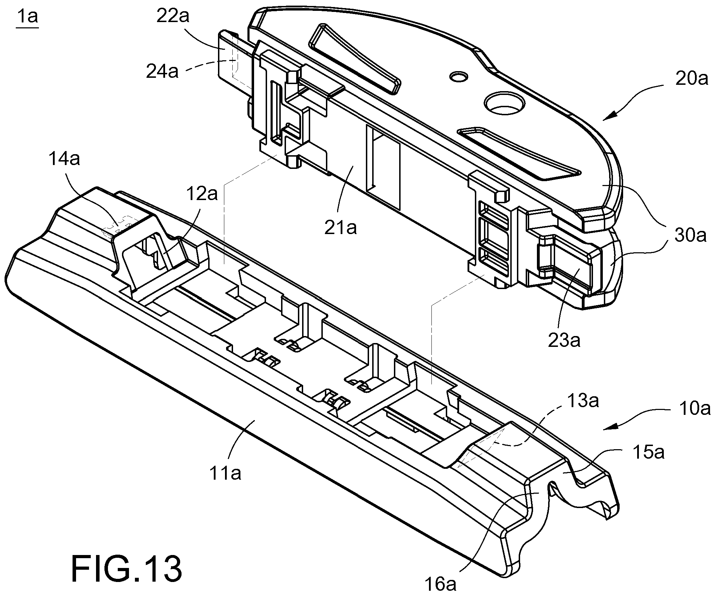

With reference to FIGS. 12 and 13 for the perspective view and the disassembled view of the assembly structure of a wiper adapter in accordance with another embodiment of the present disclosure respectively, the assembly structure of a wiper adapter 1a of this embodiment includes a fixing base 10a and an adapter 20a, and the adapter 20a is combined with the fixing base 10a. The fixing base 10a includes a seat 11a. The seat 11a includes a front slot 12a, a rear slot 13a, a positioning part 14a, a first rear wall 15a, and a second rear wall 16a. In addition, the adapter 20a includes a main body 21a, a front plate 22a, a rear plate 23a, a latch part 24a, a first rear guiding groove 25a and a second rear guiding groove 26a. The difference between this embodiment and the previous embodiment is that the adapter 20a further includes a pair of wing plates 30a arranged on two sides of the main body 21a respectively. In addition, the first rear guiding groove 25a and the second rear guiding groove 26a are located between the pair of wing plates 30a and the rear plate 23a. The assembly method between the adapter 20a and the fixing base 10a is the same as that of the previous embodiment, and thus will not be repeated.

## Claims

1. An assembly structure of a wiper adapter, comprising:
a fixing base (10, 10a), comprising a seat (11, 11a), with a receiving space (110), a front slot (12, 12a) and a rear slot (13, 13a), the front slot (12, 12a) and the rear slot (13, 13a) communicating with the receiving space (110) and located on two sides of the receiving space (110), the seat (11, 11a) comprising a positioning part (14, 14a) located on a side of the front slot (12, 12a) and a first rear wall (15, 15a) and a second rear wall (16, 16a) located on two sides of the rear slot (13, 13a) respectively; and
an adapter (20, 20a), comprising a main body (21, 21a), a front plate (22, 22a) and a rear plate (23, 23a) located on two sides of the main body (21, 21a) respectively, a latch part (24, 24a) arranged at the front plate (22, 22a), and a first rear guiding groove (25, 25a) and a first rear guiding groove (26, 26a) arranged on two sides of the rear plate (23, 23a) respectively;
wherein, the adapter (20, 20a) is assembled to the fixing base (10, 10a) by inserting the front plate (22, 22a) into the front slot (12, 12a) and the rear plate (23, 23a) into the rear slot (13, 13a), the latch part (24, 24a) latches with the positioning part (14, 14a), the first rear guiding groove (25, 25a) accommodates the first rear wall (15, 15a), and the first rear guiding groove (26 )accommodates the second rear wall (16, 16a).

2. The assembly structure of a wiper adapter according to claim 1, wherein the adapter (20) comprises a pivot part (29) for combining a driving arm, and the pivot part (29) is located on the main body (21).

3. The assembly structure of a wiper adapter according to claim 1, wherein the seat (11) comprises a first front wall (15) and a second front wall (16) located on two sides of the front slot (12) respectively, the main body (21) comprises a first front guiding groove (221) and a second front guiding groove (222) located on two sides of the front plate (22) respectively, the first front wall (15) is slidable relative to the first front guiding groove (221), and the second front wall (16) is slidable relative to the second front guiding groove (222).

4. The assembly structure of wiper adapter according to claim 1, wherein the seat (11) of the fixing base (10) comprises a plurality of slide slots (17) formed around the periphery of the receiving space (110), the adapter (20) comprises a plurality of slide blocks (27) located on a side of the main body (21) facing the fixing base (10), and the slide blocks (27) are positioned in the slide slots (17) respectively.

5. The assembly structure of a wiper adapter according to claim 4, wherein each slide slot (17) is an L-shaped slot, and each slide block (27) is moved and positioned in the corresponding slide slot (17).

6. The assembly structure of wiper adapter according to claim 4, wherein the slide slots (17) are spaced from each other and located on two sides of the receiving space (110) respectively, and the slide blocks (27) are spaced from each other and disposed at the bottom of the main body (21).

7. The assembly structure of a wiper adapter according to claim 1, wherein the main body (21) comprises a latching rib (24) located on an inner wall of the rear slot (13), and the latching rib (24) latches with the rear plate (23).

8. The assembly structure of a wiper adapter according to claim 1, wherein the latch part (24) is located at an outer end of the front plate (22) away from the rear plate (23).

9. The assembly structure of a wiper adapter according to claim 1, wherein the latch part (24) is a hook, the positioning part (14) is a serrated rib with a two-stage positioning point, the latch part (24) under the effect of an external force is moved from a side of the positioning part (14) to another side of the position part and positioned.

10. The assembly structure of a wiper adapter according to claim 1, wherein the adapter (20a) further comprises a pair of wing plates (30a) located on two sides of the main body (21a) respectively, and the first rear guiding groove (25a) and the second rear guiding groove (26a) are located between the pair of wing plates (30a) and the rear plate (23a).
